# EUROPEAN PATENT SPECIFICATION

(11) **EP 0 656 285 B1**
(45) Date of publication and mention of the grant of the patent: **14.05.1997**
(21) Application number: 94308203.2
(22) Date of filing: 08.11.1994
(51) Int. Cl.: B60R 22/10, B60N 2/28

(54) **Child safety seat**
Sicherheitssitz für Kinder
Siège de sécurité pour enfants

(30) Priority: 03.12.1993 GB 9324902
(43) Date of publication of application: 07.06.1995
(73) Proprietor: Britax-Excelsior Limited, Warwick CV34 6DE (GB); BRITAX RÖMER Kindersicherheit GmbH, D-89024 Ulm (DE)
(72) Inventor: Burleigh, David William, Bognor Regis, West Sussex (GB); Czernakowski, Waldemar, D-89134 Blaustein (DE); Wetter, Hermann, D-89075 Ulm (DE)
(74) Representative: Hollinghurst, Antony

(56) References cited:
- EP-A- 0 287 259
- EP-A- 0 295 838
- WO-A-86/02050
- US-A- 4 886 315

## Description

This invention relates to a child safety seat of the type having a seat back and a harness including two shoulder straps, each of which has an end which projects through an opening in the seat back and is attached to retractor means mounted behind the seat back whereby the lengths of the shoulder straps can be adjusted while the seat is occupied.

A safety seat of this type is disclosed in WO-A-8602050. The two ends of the shoulder straps are connected to a common strap which extends down behind the backrest portion and under a seat portion of the child seat to a retractor located behind the bottom of the seat back of the child seat. With this arrangement, the shoulder straps are turned through an angle of more than 270° where they pass through the openings in the seat back, thus resulting in higher friction which may lead to undesirable belt slack. In addition, the load imposed by each shoulder strap on the seat back is substantially greater than the tension in such shoulder strap.

EP-A-0287259 discloses a child seat with attachments for the shoulder straps of the harness on a carriage which is mounted on the rear side of the backrest for vertical sliding movement relative thereto.

It is an object of the invention to provide a child safety seat which is not subject to the above noted problems.

According to the invention, in a child safety seat of the type described above, the retractor means are mounted behind the seat back adjacent to the openings therein.

The retractor means may comprise a separate retractor for each shoulder strap mounted adjacent to the corresponding opening in the seat back.

Preferably, the two retractors are reels mounted on a common shaft and coupled for simultaneous rotation so as to ensure that the lengths of the two shoulder straps remain equal to one another.

In a preferred form of the invention, the two retractors are mounted on a carriage which is mounted on the rear side of the seat back for vertical sliding movement relative thereto. Preferably, the carriage is coupled to the seat back by a jacking screw so that its height relative to the seat back can be adjusted by rotation of the jacking screw.

An embodiment of the invention will now be described, by way of example, with reference to the accompanying drawings, in which:
Figure 1 is a view of one side of a child safety seat in accordance with the invention;
Figure 2 is a back view of the seat shown in Figure 1;
Figure 3 is a view of the upper part of the other side of the seat shown in Figures 1 and 2, partly broken away on the line 3-3 in Figure 2;
Figure 4 is a side view similar to Figure 3, partly broken away on the line 4-4 in Figure 2; and
Figure 5 is a side view similar to Figures 3 and 4, partly broken away on the line 5-5 in Figure 2.

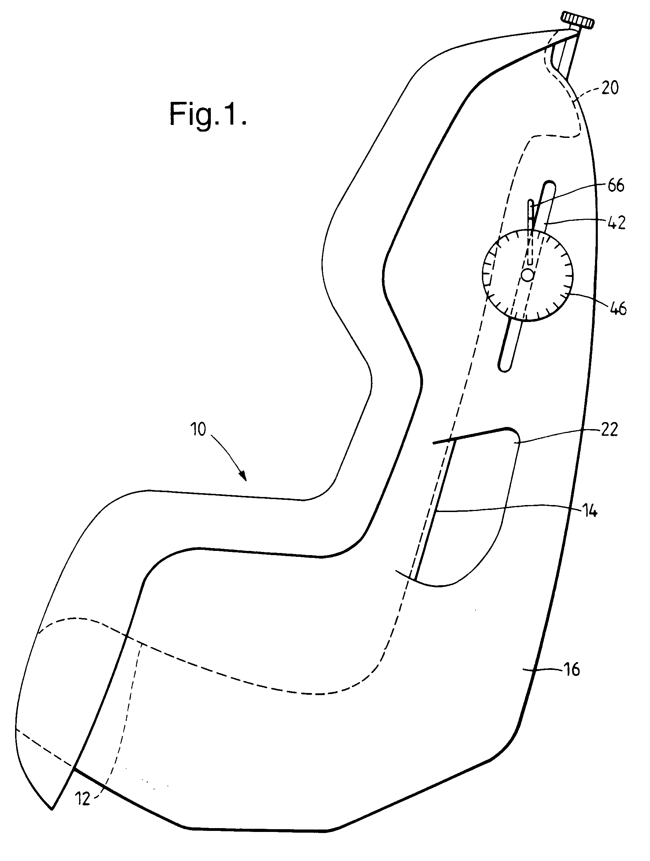

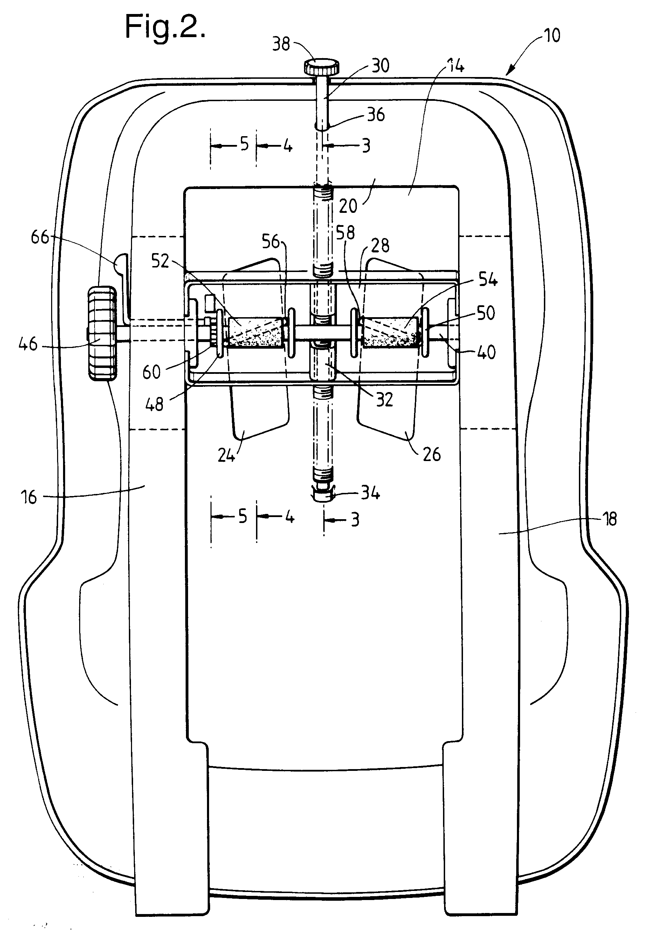

Referring to Figures 1 and 2, a child safety seat comprises a moulded plastics shell 10 having a seat portion 12 and a backrest portion 14. Behind the backrest portion 14, the shell 10 has two mutually parallel vertically extending integrally moulded reinforcing ribs 16 and 18 which are interconnected at their upper ends by a cross rib 20. The ribs 16 and 18 have openings 22 for receiving a strap of a vehicle seat belt whereby the shell 10 may be secured in place on a vehicle seat.

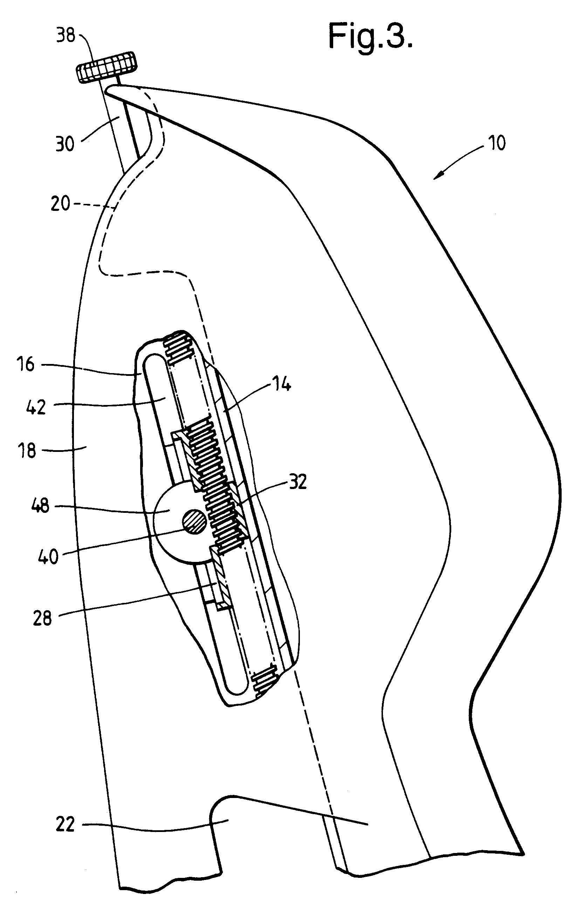

As can be seen from Figures 2 and 3, the seat back has a pair of vertically extending elongate slots 24 and 26 above the level of the openings 22. A carriage 28 is slidably mounted between the ribs 16 and 18 in the vicinity of the slots 24 and 26. A jacking screw 30 engages in a nut 32 on the carriage 28. The bottom end of the jacking screw 30 is journalled in a bearing 34 on the seat back 14. Above the carriage 28, the jacking screw 30 projects through a hole 36 in the cross rib 20 and has a knob 38 on its upper end. Rotation of the knob 38 adjusts the height of the carriage 28 relative to the seat back 14.

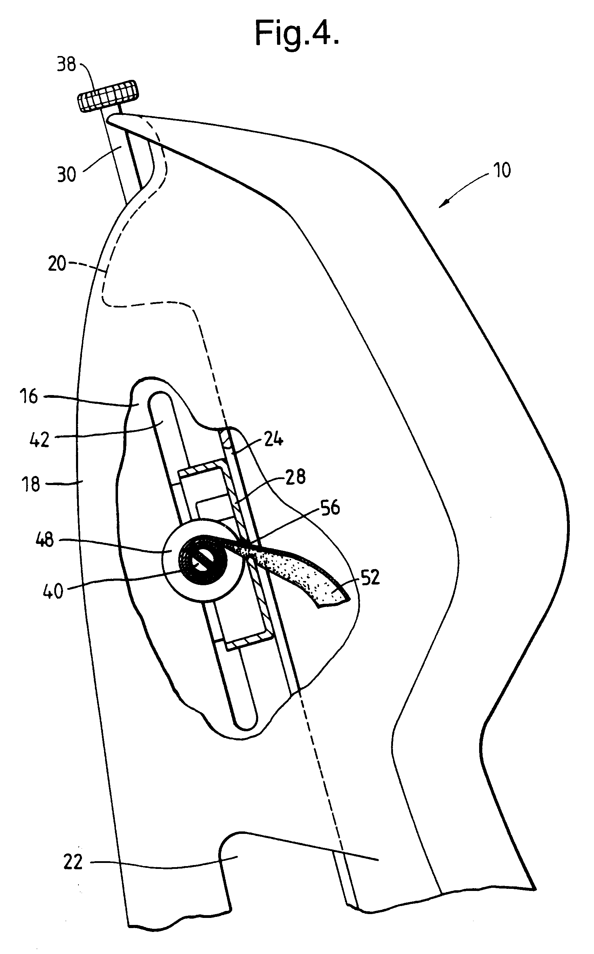

Referring particularly to Figures 2 and 4, a transverse shaft 40 is journalled on the carriage 28 and projects through slots 42 in the ribs 16 and 18 with a knob 46 on one end. Two reels 48 and 50 are mounted on the shaft 40 and coupled for simultaneous rotation therewith. Each reel 48, 50 is aligned both with a respective one of the vertical elongate slots 24 and 26 and with a respective transverse slot 56, 58 extending through the carriage 28. A respective shoulder strap 52, 54 of a child's harness is wound on each of the reels 48, 50 and projects through respective slots 56, 58 in the carriage 28 and the slots 24 and 26 in the seat back 14. Thus, rotation of the knob 38 causes vertical movement of the carriage 28 so as to vary the height of the slots 56 and 58 through which the shoulder straps 52 and 54 project. As can be seen from Figure 2, slots 56 and 58 in the carriage 28 are longer than the width of the elongate slots 24 and 26 which are further apart at their upper ends than at their lower ends. Consequently, as the height at which the shoulder straps 52 and 54 project from the seat back increases, the shoulder straps are moved further apart, as described in EP-A-0287259. The means coupling the reels 48 and 50 to the shaft 40 allows limited relative axial movement to accommodate this movement.

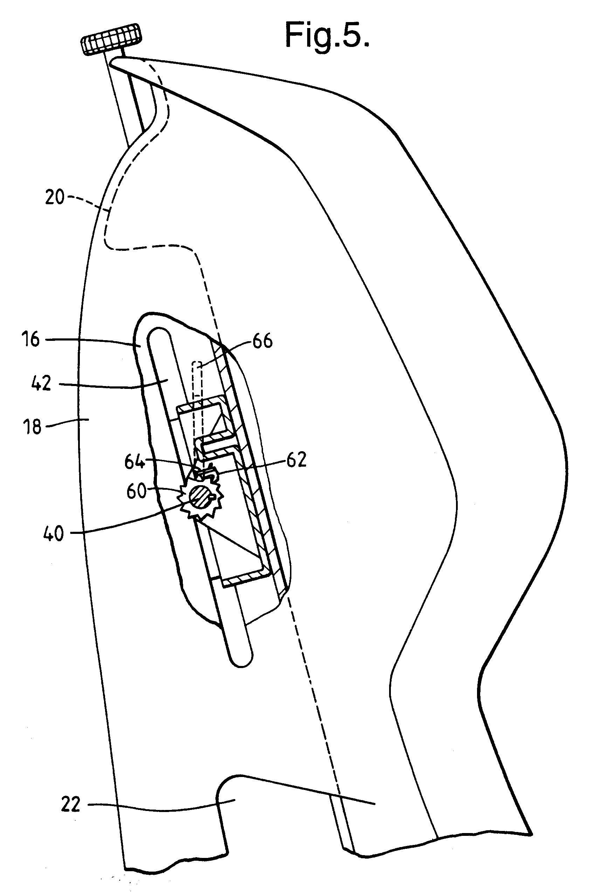

Referring to Figures 2 and 5, the shaft 40 also carries a ratchet wheel 60 which is engaged by a pawl 62 so as to resist protraction of the shoulder straps 52 and 54. The pawl 62 is biassed into its engaged position by a spring 64 and is coupled to a manually operable release lever 66 whereby it may be moved out of engagement with the ratchet wheel 60. When it is desired to shorten the shoulder straps 52 and 54, it is merely necessary to rotate the knob 46 in the clockwise direction as viewed in Figure 1 (the anti-clockwise direction as viewed in Figure 5), the diameter of the knob 46 being sufficiently larger than the diameter of the reels 48 and 50 to provide a significant mechanical advantage. When it is desired to lengthen the shoulder straps 52 and 54, the lever 66 must be displaced forwardly so as to disengage the pawl 62 and allow the shaft 40 to rotate in the anti-clockwise direction as viewed in Figure 1 (the clockwise direction as viewed in Figures 4 and 5).

In order to reduce friction, the upper and/or lower edges of the transverse slots 56 and 58 may be bounded by respective rollers (not shown).

In an alternative embodiment of the invention, the reels 48 and 50 are mounted directly on the seat back 14 above the carriage 28. Each of transverse slots 56 and 58 may be replaced by a vertically spaced series of transverse slots in the seat back 14, in which case the vertically extending elongate slots 24 and 26 are omitted.

## Claims

1. A child safety seat (10) having a seat back (14) and a harness including two shoulder straps (52, 54), each of which has an end which projects through an opening (24, 26) in the seat back (14) and is attached to retractor means (48, 50) mounted behind the seat back (14) whereby the lengths of the shoulder straps (52, 54) can be adjusted while the seat (10) is occupied, characterised in that the retractor means (48, 50) are mounted behind the seat back (14) adjacent to the openings (24, 26) therein.

2. A child safety seat according to claim 1, wherein the retractor means comprises a separate retractor (48, 50) for each shoulder strap (52, 54) mounted adjacent to the corresponding opening (24, 26) in the seat back (14).

3. A child safety seat according to claim 2, wherein the two retractors are reels (48, 50) mounted on a common shaft (40) and coupled for simultaneous rotation.

4. A child safety seat according to claim 2 or 3, wherein the two retractors (48, 50) are mounted on a carriage (28) which is mounted on the rear side of the seat back (14) for vertical sliding movement relative thereto.

5. A child safety seat according to claim 4, wherein the carriage (28) is coupled to the seat back (14) by a jacking screw (30) so that its height relative to the seat back (14) can be adjusted by rotation of the jacking screw (30).

## Patentansprüche

1. Kindersicherheitssitz (10) mit einer Rückenlehne (14) und einem Geschirr mit zwei Schultergurten (52, 54), von denen jeder mit einem Ende durch eine Öffnung (24, 26) in der Rückenlehne (14) läuft und an einer Rückzieheinrichtung (48, 50) befestigt ist, welche hinter der Rückenlehne (14) gelagert ist, wodurch die Längen der Schultergurte (52, 54) eingestellt werden können, während der Sitz (10) besetzt ist, **dadurch gekennzeichnet**, daß die Rückzieheinrichtung (48, 50) hinter der Rückenlehne (14) benachbart zu den darin befindlichen Öffnungen (24, 26) gelagert ist.

2. Kindersicherheitssitz nach Anspruch 1, bei dem die Rückzieheinrichtung einen getrennten Strammer (48, 50) für jeden Schultergurt (52, 54) aufweist, gelagert in der Nachbarschaft der entsprechenden Öffnung (24, 26) in der Rückenlehne (14).

3. Kindersicherheitssitz nach Anspruch 2, bei dem die zwei Strammer Wickelrollen (48, 50) sind, die auf einer gemeinsamen Welle (40) gelagert und zwecks gemeinsamer Drehung gekoppelt sind.

4. Kindersicherheitssitz nach Anspruch 2 oder 3, bei dem die zwei Strammer (48, 50) auf einem Schlitten (28) gelagert sind, der auf der Rückseite der Rückenlehne (14) gelagert ist, um gegenüber dieser eine vertikale Gleit-Relativbewegung auszuführen.

5. Kindersicherheitssitz nach Anspruch 4, bei dem der Schlitten (28) mit der Rückenlehne (14) durch eine Hubspindel (30) gekoppelt ist, so daß seine Höhe relativ zu der Rückenlehne (14) durch Drehen der Hubspindel (30) einstellbar ist.

## Revendications

1. Un siège de sécurité pour enfants (10) comprenant un dossier (14) et un harnais pourvu de deux sangles d'épaule (52, 54), chacune d'elles ayant une extrémité qui fait saillie à travers une ouverture (24, 26) du dossier (14) et est fixée à des moyens de rétraction (48, 50) montés derrière le dossier (14), de manière que les longueurs des sangles d'épaule (52, 54) puissent être ajustées quand le siège (10) est occupé, caractérisé en ce que les moyens de rétraction (48, 50) sont montés derrière le dossier (14), en position adjacente aux ouvertures (24, 26) de celui-ci.

2. Un siège de sécurité pour enfants selon la revendication 1, dans lequel les moyens de rétraction comprennent un rétracteur indépendant (48, 50) pour chaque sangle d'épaule (52, 54), monté adjacent à l'ouverture correspondante (24, 26) du dossier (14).

3. Un siège de sécurité pour enfants selon la revendication 2, dans lequel les deux rétracteurs sont des enrouleurs (48, 50) montés sur un arbre commun (40) et accouplés pour effectuer une rotation simultanée.

4. Un siège de sécurité pour enfants selon la revendication 2 ou 3, dans lequel les deux rétracteurs (48, 50) sont montés sur un chariot (28) qui est monté sur la face arrière du dossier (14) pour effectuer un mouvement de coulissement vertical par rapport à celui-ci.

5. Un siège de sécurité pour enfants selon la revendication 4, dans lequel le chariot (28) est accouplé au dossier (14) par un vérin à vis (30), de manière que sa hauteur par rapport au dossier (14) puisse être réglée par la rotation du vérin à vis (30).
